# EUROPEAN PATENT APPLICATION

(11) **EP 2 993 425 A1**
(43) Date of publication of application: **09.03.2016**
(21) Application number: 14792028.4
(22) Date of filing: 23.04.2014
(51) Int. Cl.: F24J 2/07

(54) **THERMALLY-INSULATED TUBULAR-TOWER SOLAR RECEIVER COMPRISING A SYSTEM FOR HARNESSING ENERGY LOSSES**

(30) Priority: 29.04.2013 ES 201330621
(71) Applicant: Termo Fluids, S.L., 08204 Sabadell (Barcelona) (ES)
(72) Inventor: LEHMKUHL BARBA, Oriol, E-08204 Sabadell (Barcelona) (ES); COLOMER REY, Guillem, E-08204 Sabadell (Barcelona) (ES); BORRELL POL, Ricard, E-08204 Sabadell (Barcelona) (ES)
(74) Representative: Morgades y Manonelles, Juan Antonio
(86) International application number: PCT/ES2014/070351
(87) International publication number: WO 2014/177740

(57) **Abstract**

The invention relates to different elements for increasing the yield of tubular-tower solar receivers, reducing losses through radiation. The term tubular receiver is used to mean receivers that use a heat-transfer fluid of the liquid or liquid/vapour mix type, which flows through generally circular ducts or tubes acting as an absorber, in which the heat-transfer fluid can be any fluid having physical properties suitable for the working conditions of the receiver (water, oils, molten salts and others).

## Description

### Object of the Invention.

This invention relates to different designs for increasing the yield of tubular-tower solar receivers, reducing losses through radiation. The term tubular receiver is used to mean receivers that use a heat-transfer fluid of the liquid or liquid/vapour mix type, which flows through generally circular ducts or tubes acting as an absorber, in which the heat-transfer fluid can be any fluid having physical properties suitable for the working conditions of the receiver (water, oils, molten salts and others).

### State of the Art.

Current solar tower power plants, which can be considered as state of the art are plants that generate electrical energy from solar radiation. They are basically composed of a receiver (which can be inside a cavity or totally exposed to the outside) located at the top of a tower that is surrounded, total or partially, by a field of heliostats.

There is a receiver at the top of the tower, which may be circular, and in this case it is surrounded by heliostats on all sides or non-circular, and in this case it is surrounded by heliostats preferably on one side.

Heliostats are mirrors that reflect solar radiation, concentrating it on the receiver. A heat-transfer fluid circulates inside the receiver, this fluid could be air, in the case of the volumetric receivers, or a liquid and/or a liquid-steam mixture in the case of tubular receivers, which are heated by solar rays and the thermal energy thus obtained is used to generate electrical energy.

Patent US3924604 contains one of the first descriptions of a solar tower power plant. Solar tower power plant with different and very diverse designs have been built up to now (with an exterior receiver or located inside a cavity. All of which have a tower in the centre of the heliostat field or to one side, using different heat-transfer fluids, etc.), but they all share the same basic characteristics, (field of heliostats and receiver located in a tower) mentioned in this patent.

In order to achieve the maximum performance in a conventional solar tower power plant, it is necessary to maximise each of its elements. This invention intends to increase the efficiency of tubular receivers using liquid and/or liquid/steam mixtures as a heat-transfer fluid. The most significant heat losses that affect the receiver are losses by convection, caused by the contact of the receiver with the outside air, by radiation, caused by the temperature differences between the receiver and the surfaces that are in its field of view (walls of the receiver cavity, sky, etc.) and reflected heat, due to the fact that not all the solar radiation falling on the receiver is absorbed.

### Scope of the Invention.

This invention aims to increase the performance of solar tower receivers with tubular receivers that absorb the solar energy concentrated from a field of heliostats and convert it into high temperature thermal energy, reducing losses by radiation.

Different elements are proposed for this purpose: a visor at the top of the receiver; a strategic placement of the receiver tubes, with or without selective surfaces in different areas, making the best use of solar and thermal radiation and minimizing losses; fins connecting the tubes with the aim of homogenising the behaviour of the assembly and minimising losses by radiation.

### Description of the Invention.

This invention consists of different elements that aim to increase the efficiency of the tubular solar tower receivers. For this purpose, different strategies are applied to reduce energy losses in the form of heat by radiation.

Strategies to reduce radiation losses are the following:
- A visor, will reduce the exposure of the panels of the receiver to the sky, also reducing thermal radiation losses.
- Placing the tubes of the solar receiver in different rows with regard to the outside, it could be achieved that solar radiation reflected by the tubes of the inner rows would mostly end up at the rear of the tubes they had opposite, thus reducing losses by reflection of solar radiation. A large proportion of the thermal radiation emitted by the inner tubes would also, in the same manner, end up in the rear of the tubes located opposite, thus reducing losses due to thermal radiation. There is the possibility of using appropriate selective surfaces to strengthen this effect, according to the predominant type of incident radiation (solar or thermal), in each tube area.
- With regard to the aforementioned fins connecting the tubes, it would be necessary to pay special attention to the selective behaviour of the fins for their efficiency with regard to radiation and to how they are attached to the tubes, so that good contact is compatible with expansion and thermal gradients between different areas of the receiver.

Other details and features will be detailed in the description given below, which illustrate several examples of the invention shown for illustrative but not limiting purposes, with the help of the corresponding drawings.

Below is a list of the different parts of the invention, which are indicated in the following drawings with their respective numbers: (1) receiver cavity, (2) tubular tubes or conduits through which the heat-transfer fluid circulates and which also act as an absorbent surface, (3) absorber, (4) visor, (7) central area of the receiver, (8) fins, (9) receiver, (10) heliostats, (11) tower in which the receiver is placed, (12) front selective surface, (13) rear selective surface, (17) bundle of tubes.

### Description of the drawings.

Figure 1 is a schematic diagram of a solar tower power plant in which the field of heliostats (10) concentrates the solar energy on the receiver (9), which is located at the top of a tower (11), this field of heliostats (10) can be facing south for non-circular type power plants, with the tower (11) located at the southern end of the field, or distributed around the tower (11) for circular type power plants, according to the current state of the art.
Figure 2 is a schematic diagram of the plan of the receiver cavity (1) in a solar tower power plant with a non-circular type receiver, with tubes (2) through which the heat-transfer fluid circulates attached to an absorber (3), according to the current state of the art, although the tubes themselves are actually the absorber, which can be in different configurations, as shown on the right side of the figure.
Figure 3 is a schematic diagram of the plan of the receiver cavity (1) in a solar tower power plant, with a non-circular type receiver, to which a visor (4) is incorporated.
Figure 4 is a schematic diagram of the plan of the receiver cavity (1) in a solar tower power plant (18), with a non-circular type receiver, to which the absorber tubes (2) are placed in bundles (17) aligned in two or more columns or rows, each with their own vertical or horizontal movement according to the layout of the tubes (2), in this figure they are horizontal, the absorbent surface are the tubes (2) themselves, and the absorber (3) would be a final closure element that would also act as an absorbing fin.
Figure 5 is a schematic diagram of the receiver (9) in a solar tower power plant, with a circular type receiver, where the tubes (2) through which the heat-transfer fluid circulates are in different panels around the tower (11), according to the current state of the art.
Figure 6 is a schematic diagram of the receiver (9) in a solar tower power plant, with a circular type receiver, where the tubes (2) through which the heat-transfer fluid circulates are in different panels around the tower (11), with a visor (4) around the tower (11) in this embodiment.
Figure 7 is a top schematic diagram view of the receiver in a solar tower power plant, with a circular type receiver, where the tubes (2) through which the heat-transfer fluid circulates are placed around the central area of the receiver (7) in different panels, and are distributed in bundles (17), forming two or more columns, each one staggered with regard to the neighbouring columns.
Figure 8 is a schematic diagram of a tube (2), with selective surfaces that are different at the front (12) and the rear (13) with regard to the direction of incidence of solar radiation (arrows).
Figure 9 is a schematic diagram of placement of the fins (8) between the tubes (2) through which the heat-transfer fluid circulates, for non-circular type receivers.
Figure 10 is a schematic diagram of placement of the fins (8) between the tubes (2) through which the heat-transfer fluid circulates, for circular type receivers.

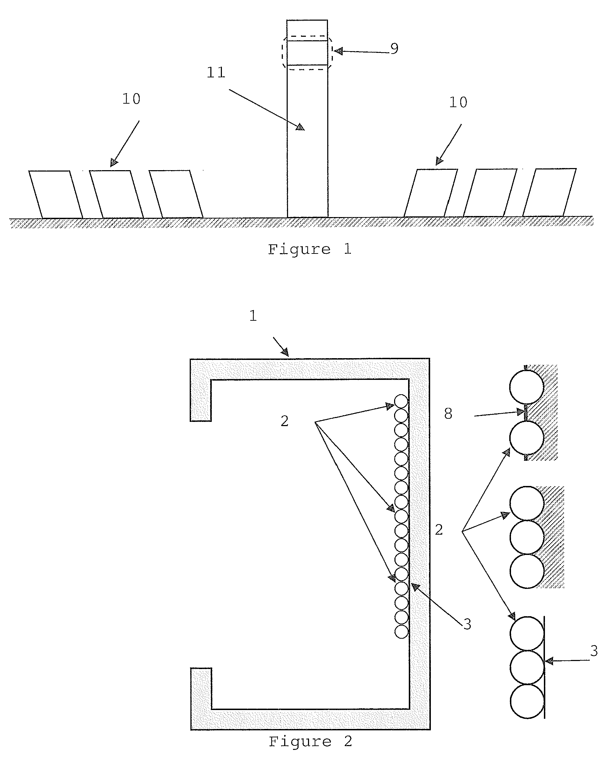

In Figures 2-4, the tubes (2) are shown horizontally for greater clarity. Although this horizontal layout is possible, in solar tower power plants, tubes (2) are normally placed vertically.

### Description of preferred embodiments of the invention.

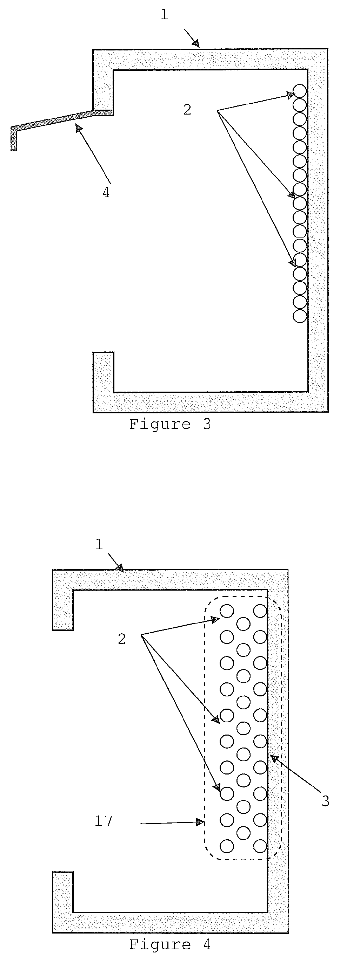

One of the preferred embodiments of this invention for solar tower power plants has non-circular type receivers, as can be seen in figure 3, in which there is a visor (4) over the receiver cavity (1) with the purpose of redirecting part of the infrared radiation back to the tubes (2).

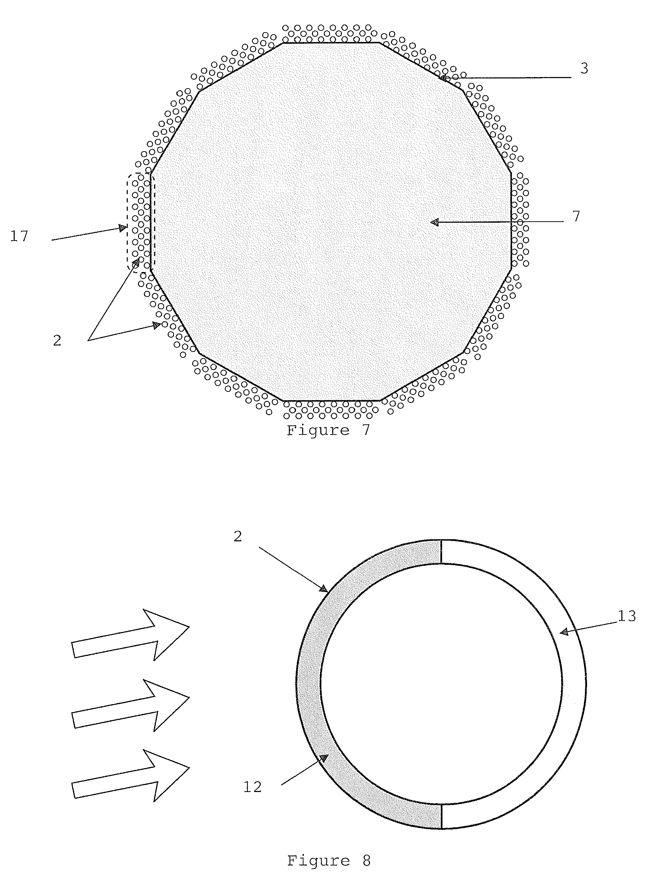

Another preferred embodiment shown in Figure 4, refers to a receiver cavity (1) of a solar tower power plant with non-circular type receivers, to which tubes (2) are placed in bundles (17) aligned in two or more columns or rows, each with their own vertical or horizontal movement according to the layout of the tubes (2), the absorbent surface are the tubes themselves, and the absorber (3) would be a final closure element that would also act as an absorbing fin. There is the possibility of using appropriate selective surfaces to strengthen this effect, according to the predominant type of incident radiation (solar or thermal), in each tube area, as can be seen in Figure 8.

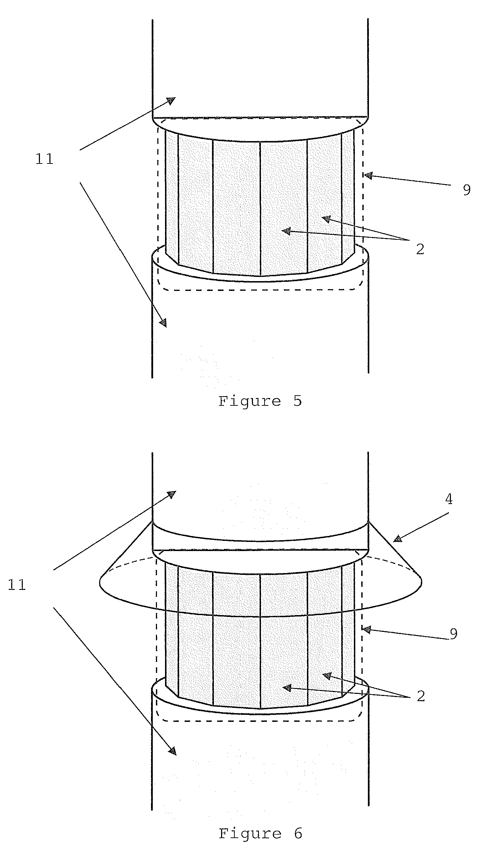

Another preferred embodiment, as can be seen in Figure 6, refers to a receiver (9) in a solar tower power plant with a circular type receiver where the tubes (2) through which the heat-transfer fluid circulates are in different panels around the tower (11), a visor (4) around the tower (11) is added in this layout with the purpose of redirecting part of the infrared radiation back to the tubes (2).

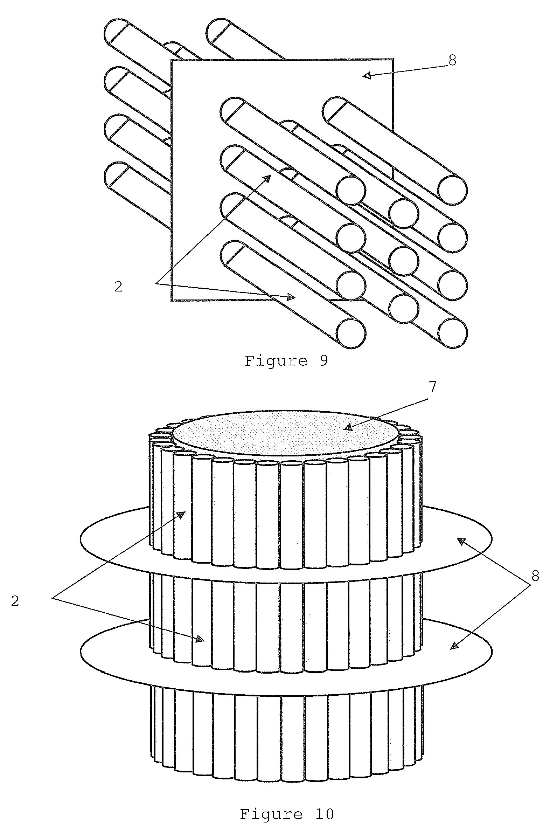

Another preferred embodiment (see Figure 7) refers to a receiver (9) in a solar tower power plant, with a circular type receiver, where the tubes (2) through which the heat-transfer fluid circulates are placed around the central area of the receiver (7) in different panels, and are distributed in bundles (17) (see Figure 9), forming two or more columns, each one staggered with regard to the neighbouring columns. There is the possibility of using appropriate selective surfaces to strengthen this effect, according to the predominant type of incident radiation (solar or thermal), in each tube area, as can be seen in Figure 8.

Although in all preferred embodiments the receiver is in vertical position, the inclination thereof can be any from vertical until completely horizontal.

## Claims

1. **"THERMALLY-INSULATED TUBULAR-TOWER SOLAR RECEIVER COMPRISING A SYSTEM FOR REDUCE ENERGY LOSSES",** used in solar tower power plants which are devised to concentrate solar energy onto a receiver by means of the strategic placement of heliostats, and transform it into high temperature thermal energy contained in tubes and/or conduits through which a heat-transfer fluid circulates, being heated by the solar radiation concentrated by the aforementioned heliostats, **characterised in that** the receiver (9) has at least one of the following elements:
a visor (4),
a bundle of tubes (17), wherein the tubes (2) are placed horizontally or vertically in said bundle (17) aligned in two or more rows or columns.

2. **"THERMALLY-INSULATED TUBULAR-TOWER SOLAR RECEIVER COMPRISING A SYSTEM FOR REDUCE ENERGY LOSSES",** according to the claim 1 **characterised in that** these elements are applied to a receiver (9) of a circular type solar tower power plant.

3. **"THERMALLY-INSULATED TUBULAR-TOWER SOLAR RECEIVER COMPRISING A SYSTEM FOR REDUCE ENERGY LOSSES",** according to the claim 1 **characterised in that** these elements are applied to a receiver (9) of a non-circular type solar tower power plant.

4. **"THERMALLY-INSULATED TUBULAR-TOWER SOLAR** RECEIVER **COMPRISING A SYSTEM FOR REDUCE ENERGY LOSSES",** according to the claims 1, 2 and 3, **characterised in that** a visor (4) is added on the upper part of the receiver (9).

5. **"THERMALLY-INSULATED TUBULAR-TOWER SOLAR RECEIVER COMPRISING A SYSTEM FOR REDUCE ENERGY LOSSES",** according to the claim 13 **characterised in that** the tubes (2) of the bundle (17) meet with at least one of the following specifications:
1. The tubes (2) are composed of different selective materials at the front (12) and rear (13) with regard to the incidence of the solar radiation.
2. The tubes (2) are joined together with fins (8).
